# EUROPEAN PATENT SPECIFICATION

(11) **EP 1 652 381 B1**
(45) Date of publication and mention of the grant of the patent: **27.12.2006**
(21) Application number: 04744577.0
(22) Date of filing: 14.07.2004
(51) Int. Cl.: H04N 7/088

(54) **METHOD OF CACHING TELETEXT PAGE DATA, TELETEXT RECEIVER SYSTEM AND ELECTRONIC VIDEO APPLIANCE**
VERFAHREN ZUM SPEICHERN VON TELETEXTDATEN, TELETEXTEMPFÄNGER UND FERNSEHEMPFÄNGER
PROCEDE POUR LA MISE EN ANTEMEMOIRE DE DONNEES DE PAGES DE TELETEXTE, SYSTEME RECEPTEUR DE TELETEXTE ET APPAREIL VIDEO ELECTRONIQUE

(30) Priority: 24.07.2003 EP 03102290
(43) Date of publication of application: 03.05.2006
(73) Proprietor: Koninklijke Philips Electronics N.V., 5621 BA Eindhoven (NL)
(72) Inventor: TKACHENKO, Serhiy, NL-5656 AA Eindhoven (NL); MACDUFF, Alan, D., NL-5656 AA Eindhoven (NL)
(74) Representative: Schmitz, Herman Jan Renier
(86) International application number: PCT/IB2004/051218
(87) International publication number: WO 2005/011275

(56) References cited:
- WO-A-00/16549
- PATENT ABSTRACTS OF JAPAN vol. 1995, no. 10, 30 November 1995 (1995-11-30) & JP 7 184172 A (TOSHIBA CORP), 21 July 1995 (1995-07-21) cited in the application
- PATENT ABSTRACTS OF JAPAN vol. 2000, no. 05, 14 September 2000 (2000-09-14) & JP 2000 050219 A (TOSHIBA CORP), 18 February 2000 (2000-02-18)

## Description

The invention relates to a method of caching teletext page data received from an arrangement of a channel selection circuit, arranged to retrieve a signal comprising video information and embedded teletext page data and belonging to a channel selected in accordance with a user command, and a teletext retrieval circuit, arranged to extract the teletext page data embedded in the received signal, wherein a count of elapsed time is started upon determining that a user command for a switch from a first selected channel to a second selected channel has been issued, and storage of received teletext page data in a memory unit is commenced when the count exceeds a certain time interval.

The invention also relates to a teletext receiver system, arranged to receive teletext page data from an arrangement of a channel selection circuit, arranged to retrieve a signal comprising video information and embedded teletext page data and belonging to a channel selected in accordance with a user command, and a teletext retrieval circuit, arranged to extract the teletext page data embedded in the received signal, and comprising a memory unit for caching received teletext page data.

The invention further relates to an electronic video appliance, preferably a television set, comprising a channel selection circuit, arranged to retrieve a signal comprising video information and embedded teletext page data and belonging to a channel selected in accordance with a user command, a teletext retrieval circuit, arranged to extract the teletext page data embedded in the received signal, a memory unit for caching teletext page data extracted by the teletext retrieval circuit, and a controller.

The invention also relates to a computer program product.

An example of a method, teletext receiver system and electronic video appliance of the types mentioned above is known from JP-A-7184172.

In the known example, when television channel number data received are referenced by a control means and switching of television channels is discriminated, a channel number of a memory means storing tentatively a channel number stored in a buffer memory is compared with a switched channel number. When they are different, a time counter means is used to count a prescribed time and when the switched channel restores to the original television channel within the prescribed time, teletext data of the television channel stored in the buffer memory are kept stored. When the enumerated data of the timer counter is in the state used as zero, elimination processing of the character program data memorized by the memory is performed and processing which newly memorises teletext data to the buffer memory is performed.

The known method has the disadvantage that, after the prescribed time has elapsed, pages belonging to channels that are invariably watched may be deleted to make room for pages belonging to a channel that happens to have been selected for a brief glance at that particular point in time.

It is an object of the invention to provide a method, teletext receiver system, electronic video appliance and computer program that help prevent loss of cached teletext page data belonging to a permanently watched channel and replacement of that teletext page data by newly arrived page data belonging to channels that are only checked by a user for a short period of time.

This object is achieved by the method according to the invention, which is characterised in that the count of elapsed time is re-started from zero if it is determined that a user command to switch from the second selected channel to any other selected channel has been issued.

In particular, the count of elapsed time is also re-started from zero if it is determined that a user command to switch from the second selected channel to a selected channel other than the first selected channel has been issued. Thus, a prolonged bout of switching from channel to channel, user behaviour also known as 'zapping', does not lead to the storage of teletext page data belonging to a channel selected by chance. The method ensures that only teletext page data belonging to a channel that a user has settled down to watch is cached. Thus, the likelihood of teletext page data belonging to a channel that is a permanent favourite with the viewer being cached in the memory unit is increased. This avoids latency when the viewer decides to use the teletext service provided on that channel.

The method preferably comprises commencing storage of received teletext page data in the memory unit alongside teletext page data previously stored in the memory unit.

Thus, for example, if the viewer returns to the first selected channel after scanning through the programs provided on other channels, caching of the teletext page data belonging to the first selected channel does not have to recommence from scratch. At least some teletext page data belonging to that channel will still be cached in the memory unit. Again, this reduces the chance of latency being experienced when a viewer decides to use the teletext service provided on this channel.

A preferred embodiment comprises storing information linking teletext page data being stored to an identification of the channel to which the signal from which it has been extracted belongs.

Thus, it is possible to store teletext page data originally embedded in signals belonging to different channels concurrently. In particular, it takes away the need to completely erase the contents of the memory unit if teletext page data belonging to a different channel than that to which the received teletext page data belongs is already stored in the memory unit when storage of the received teletext page data commences.

A preferred embodiment of the invention comprises deleting previously stored teletext page data only if it is determined that a maximum storage capacity of the memory unit is too small to allow storage of a unit of received teletext page data in the memory unit alongside teletext page data previously stored in the memory unit.

Thus, the amount of teletext page data stored in the memory unit immediately after one or more channel switches have taken place is kept as large as possible. This increases the likelihood that data encoding a desired teletext page is still in the memory unit, thereby decreasing the likelihood that latency will be experienced.

Preferably, the method comprises commencing storage of received teletext page data in the memory unit before the count exceeds the certain time interval, upon determining that a certain interruption command has been issued by a user.

The interruption command can be used to indicate that the user has settled on a particular channel before the end of the certain time interval. This enables an early start of the caching of teletext page data embedded in the signal belonging to this particular channel. More cached teletext page data for this channel is therefore available when the user decides to use the teletext service provided on this channel.

According to another aspect of the invention, the teletext receiver system according to the invention is specially adapted for carrying out a method according to the invention.

The user of the teletext receiver system will experience less latency, because more effective use is made of the storage capacity of the memory unit. Only teletext page data originally embedded in signals belonging to channels that are watched continuously over a prolonged time interval is stored in the memory unit. Teletext page data belonging to fleetingly selected channels is disregarded in the caching process.

According to another aspect of the invention, there is provided an electronic video appliance, preferably a television set, comprising a channel selection circuit, arranged to retrieve a signal comprising video information and embedded teletext page data and belonging to a channel selected in accordance with a user command, a teletext retrieval circuit, arranged to extract the teletext page data embedded in the received signal, a memory unit for caching teletext page data extracted by the teletext retrieval circuit, and a controller, specially adapted for carrying out a method according to the invention.

Such a video appliance, which may also be a video recorder, DVD player, or suitable equipped personal computer, enables more teletext page data belonging to channels watched over an extended time interval to be cached. Thus, when a viewer elects to view teletext pages belonging to that channel, the likelihood of a latency being experienced is decreased.

According to a further aspect of the invention, there is provided a computer program product, comprising means, when run on a programmable device for enabling the programmable device to carry out a method according to the invention.

These and other aspects of the invention will be apparent from and elucidated with reference to the embodiment(s) described hereinafter.

The invention will now be explained in further detail, with reference to the accompanying drawings, of which:
Fig. I shows a block diagram, illustrating by way of example a television equipped to implement the invention;
Fig. 2 shows schematically the organisation of data stored in a memory unit of the television set illustrated in Fig. 1; and
Fig. 3 is a statechart diagram illustrating an embodiment of the method of the invention.

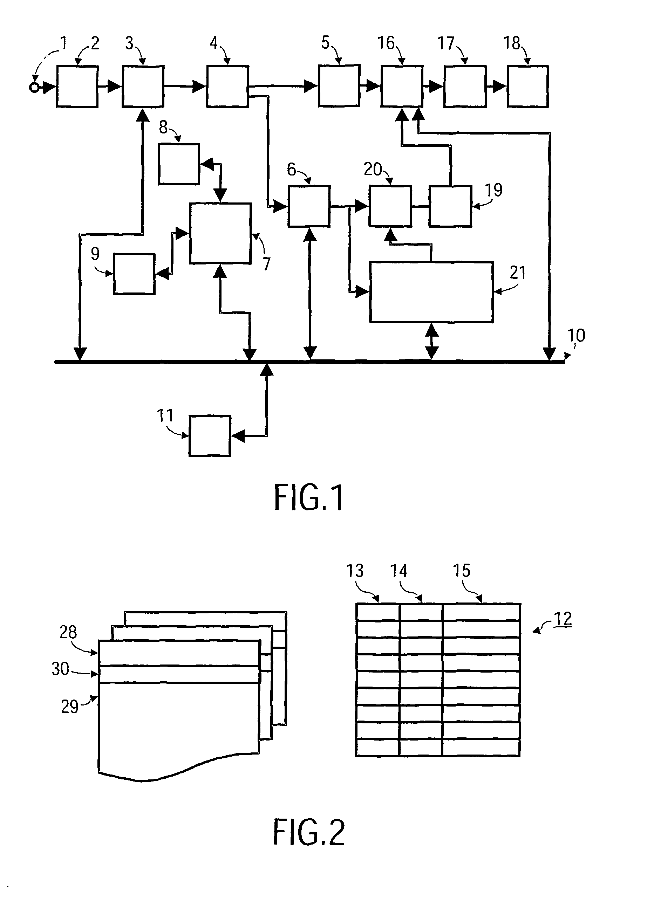

In the television system schematically shown in Fig. 1, a radio-frequency signal is received at an input 1 of a television receiver. The received signal passes through an RF amplifier 2 to a tuning circuit 3. The tuning circuit 3 tunes to a specific carrier frequency, associated with a television channel. Thus, the tuning circuit retrieves a signal belonging to that channel, i.e. selects a signal belonging to one of a plurality of channels. The output signal of the tuning circuit 3 is passed to a demodulation circuit 4. The demodulation circuit 4 separates video, audio and teletext components from the carrier signal. A colour decoder 5 retrieves and processes the video component. A teletext data acquisition circuit 6 retrieves teletext page data.

It is observed that the shown television system is but one of a variety of possible electronic video appliances in which the invention can be implemented. Other examples are video recorders, DVD (digital versatile disc)-recorders and personal computers equipped, for instance with an optical read/write drive and/or a television tuner card. In some of these implementations, a channel need not necessary correspond to a broadcast channel, but may also be a channel on a recording medium, for example on a DVD. Thus, a channel selection circuit in the sense of the present invention may comprise a circuit section for selecting an alternative source of signal with video and embedded teletext page data, such as the signal read from a DVD. In addition, it is noted that a signal belonging to a channel may, in the context of the present invention, also be a stream of digital data packets identified as belonging to a certain programme, wherein data packets belonging to an elementary stream containing the video data are interleaved with data packets forming an elementary stream containing teletext page data. The amalgam of elementary streams should then be regarded as a programme stream, i.e. a signal, with teletext page data embedded in it.

Returning to the example, the television system of Fig. 1 is controlled by a microcontroller 7, which executes instructions stored in a Read Only Memory 8 of a known type. The microcontroller further has access to a non-volatile memory 9, for storing data that must not be erased when the television's power is turned off. Commands and data are transferred between the microcontroller 7 and the various components operating under its control via a bus 10, for example an I²C bus.

A user of the television system enters commands via a remote control unit (not shown), which exchanges data with a remote control interface circuit 11. The commands are passed to the microcontroller 7 via the bus 10.

One command the viewer may enter is a command to switch channels. This command results in a command from the microcontroller 7 to the tuning circuit 3 directing it to tune to a different carrier frequency.

A number of channels may be pre-set. To this end, a channel list 12 (see Fig. 2) is stored in the non-volatile memory 9. The channel list 12 is shown conceptually in Fig. 2 as a table, in which a first column 13 contains an index into the table, i.e. the number of the pre-set channel. A second column 14 contains the tuning information. Information in a third column 15 is used to establish a ranking of channels, in order to implement a cache replacement policy, briefly described below and in further detail in the patent application with the International Publication Number WO 2004/114659 A1, entitled: 'Method of caching teletext page data, teletext receiver system and television set', filed by the present applicant.

Returning to Fig. 1, when teletext is not being viewed, the output of the colour decoder 5 is passed to a multiplexer 16, which passes it unaltered to a video amplifier 17 driving a video display unit 18. The latter may be a cathode ray tube or a plasma display unit, for instance. The remote control unit is provided with a button for issuing a command to switch to a mode in which teletext pages are generated by a display section 19, which decodes teletext page data loaded into a teletext memory 20. In the mode in which the teletext service of the selected channel is being used, the output generated by the display section 19 is used by the multiplexer 16 to replace part (in the case of subtitles) or all of the video signal provided by the colour decoder 5.

Teletext page data is transmitted in a carrousel, implying that a certain amount of time elapses between the receipt of teletext page data encoding a first page in a teletext service and that encoding a further page. In order to be able to provide a faster response to a viewer-initiated command selecting a specific page, the television system comprises a teletext page data cache 21. If a request for a specific page is received through the remote control interface circuit 11, the teletext page data cache 21 is searched first for the requested page. If it is found, it is transferred to the teletext memory 20 for display. If not, the teletext page data encoding the requested page will have to be provided from the teletext data acquisition circuit 6, as soon as it has been provided by the tuning circuit 3 and demodulation circuit 4.

Regardless of whether the teletext service of the selected channel is being used, as a general rule, teletext page data extracted from the signal belonging to the currently selected channel is stored in the teletext page data cache 21. However, by means of the invention, it is ensured that this general rule is only observed when it is determined that the currently selected channel is a channel that has been selected for an extended period of time. Thus, it is ensured that for such a channel, as much of the teletext page data is cached as possible. On the other hand, teletext page data belonging to fleeting selected channels is not allowed to take up scarce space in the teletext page data cache 21.

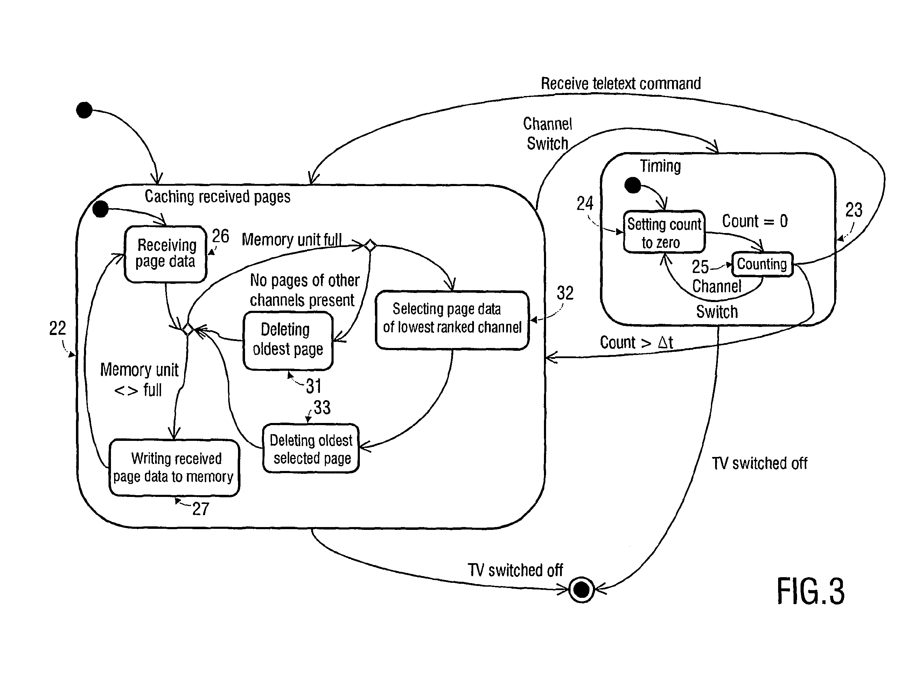

Fig. 3 shows the various states through which the television system of Fig. 1 passes, in so far as relevant to the invention. In a first state 22, a first channel has been selected by the viewer. The viewer may be watching either the broadcast video information, or the television system may be in the teletext mode. All the while, received teletext page date, originally embedded in the signal output by the demodulation circuit and belonging to the currently selected channel is stored in the teletext page data cache.

When the viewer issues a command to switch from the first channel to a second channel via the remote control unit, this command is passed to the microcontroller 7 by the remote control interface circuit 11. The command to switch from the first channel to the second channel serves as a trigger to move the television system into a timing state 23. Having determined that a user command for a switch from the first channel to the second channel has been issued, the television system enters a state 24, in which a count of elapsed time is started, by setting a counter to zero. In a subsequent state 25, the count is progressively increased, using e.g. the clock frequency of the microcontroller 7 to provide a timebase.

In the illustrated embodiment, when the television system is kept switched on, the state 25 in which the count is progressively increased can be exited from in three ways. Firstly, if a user issues a command to switch to a channel other than the second channel, i.e. the first channel or a third channel, the television system returns to state 24, in which the count of elapsed time is set back to zero. A user command to switch from the second selected channel to any other selected channel thus results in a re-start of the elapsed time from zero.

Secondly, the state 25 in which the count of elapsed time is progressively increased is exited from if the count exceeds a certain time interval Δt. The television system then returns to the state 22, in which received teletext page data is cached. The caching process will be explained in more detail below. Note that the teletext page data cached is the teletext page data embedded in the signal belonging to the channel selected at the point in time the timing state 23 was left (and therefore also selected at the point in time the count was last set to zero, since the selection of the channel serves as the trigger for entering state 24).

In the embodiment shown, the timing state 23 can also be exited from before the count of elapsed time has exceeded Δt when it is determined that a certain interruption command has been issued by the user. In the preferred embodiment, the interruption command is in fact the command resulting from the pressing of a teletext button on the remote control unit. This signals to the microcontroller 7 that teletext pages must be displayed immediately. It also signals to the microcontroller 7 that page data embedded in the signal belonging to the currently selected channel must be cached immediately. Thus, it is ensured that more page data is available in the teletext page data cache 21, from which teletext page data is now also being retrieved for transfer to the teletext memory 20.

The way in which teletext page data is cached in the embodiment shown in Fig. 3, when the television system is in state 22 will be briefly described here. Alternatives are possible, and are described in more detail in the co-pending patent application of the same applicant referred to above.

An advantageous feature of the invention is that received teletext page data is stored in the teletext page data cache 21 alongside teletext page data previously stored in the teletext page data cache 21, at least when storage for a newly selected channel commences. Thus, when caching of data belonging to a second channel commences, it is stored alongside the data belonging to the first, previously selected channel. This enables a subsequent return to the first channel with a reduced chance of experiencing latency when teletext page data is then displayed, since some of the data belonging to the first channel is likely to be still present.

It will be assumed that the teletext page data is passed from the teletext data acquisition circuit 6 to the teletext page data cache 21 in units, corresponding for example, but not necessarily, to the data encoding a single page in a teletext service. Thus, in a first state 26 the page data for a unit is received. Subsequently, it is determined whether the maximum storage capacity of the teletext page data cache 21 is sufficient to allow storage of the received unit of data alongside teletext page data already present. If the teletext page data cache 21 is not yet full, the received unit of teletext page data is written to the teletext page data cache 21, during which the television system is in a cache writing state 27.

Because teletext page data belonging to different channels may be stored together in the teletext page data cache 21, information linking teletext page data being stored to an identification of the channel to which the signal from which it has been extracted belongs, is also stored. Although this may be done in a number of ways, one way, shown in Fig. 2, is to add a channel tag 28 to each unit of teletext page data 29 encoding a teletext page. In the illustrated embodiment of the invention, a time stamp 30 is also tagged to the unit of teletext page data 29. The time stamp indicates the time the unit of teletext page data 29 was last retrieved from the teletext page data cache 21.

Returning to Fig. 3, if it is determined that a maximum storage capacity of the teletext page data cache 21 is too small to allow storage of the received unit of teletext page data alongside the teletext page data already present, data previously written to the teletext page data cache 21 is deleted. Advantageously, only a portion of the previously stored page data is deleted, i.e. just enough to make room for the received unit of teletext page data. This ensures that the teletext page data cache 21 is always used to the fullest extent possible.

In order to determine which data to delete, it is first determined, using the information linking stored teletext page data to an identification of the channel to which the signal from which it was extracted belongs, whether data belonging to any other channel than the currently selected channel is present. If this is not the case, then the television system enters a state 3 1 in which a unit of teletext page data belonging to the currently selected channel is deleted. Using the time stamp 30, data encoding the oldest page is deleted. The process is repeated until there is enough space to store the received page data (state 27).

It may also be determined that teletext page data originally extracted from a signal belonging to a different channel from the one currently selected is present in the teletext page data cache 21. In this case, the television system moves to a state 32, in which a channel is selected for which page data is to be deleted. This is done using the information in the third column 15 of the channel list 12. This information establishes a ranking of channels, for example according to the frequency with which each is selected or according to the time each was last selected. Page data originally extracted from a signal belonging to the lowest ranked channel is selected in a state 32 prior to a state 33 in which some of that data is deleted. In the shown embodiment, the time stamp 30 is used here also to delete the teletext page data encoding the oldest of the pages belonging to the lowest ranked channel. The invention is not limited to the described embodiments, which may be varied in a number of ways within the scope of the attached claims. Thus, for instance, the shown states in Fig. 3 are not mutually exclusive, in that caching may continue whilst the count of elapsed time since the issue of a user command to switch channels has been issued.

It should be noted that the above-mentioned embodiment illustrates rather than limits the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

Thus, for example, the method according to the invention may also be carried out by a computer, for example a personal computer, operatively connected to a television tuner and teletext data acquisition circuit. The latter may be installed on a tuner card installed in the computer, or in an external tuner, connected to the computer by means of, for example a USB link. In this setting, the method may be used to manage the caching of teletext page data in a memory circuit of the tuner or the personal computer, in order to achieve the same advantages as are achieved in the embodiment described in more detail herein above.

## Claims

1. Method of caching teletext page data received from an arrangement of a channel selection circuit (3), arranged to retrieve a signal comprising video information and embedded teletext page data and belonging to a channel selected in accordance with a user command, and a teletext retrieval circuit (6), arranged to extract the teletext page data embedded in the received signal, wherein a count of elapsed time is started upon determining that a user command for a switch from a first selected channel to a second selected channel has been issued, and storage of received teletext page data in a memory unit (21) is commenced when the count exceeds a certain time interval, **characterized in that** the count of elapsed time is re-started from zero if it is determined that a user command to switch from the second selected channel to any other selected channel has been issued.

2. Method according to claim 1, comprising commencing storage of received teletext page data in the memory unit (21) alongside teletext page data previously stored in the memory unit (21).

3. Method according to claim 1 or 2, comprising storing information (28) linking teletext page data being stored to an identification of the channel to which the signal from which it has been extracted belongs.

4. Method according to claim 2 or 3, comprising deleting previously stored teletext page data only if it is determined that a maximum storage capacity of the memory unit (21) is too small to allow storage of a unit of received teletext page data in the memory unit (21) alongside teletext page data previously stored in the memory unit (21).

5. Method according to claim 4, comprising deleting only a portion of the previously stored teletext page data.

6. Method according to any one of the previous claims, comprising commencing storage of received teletext page data in the memory unit (21) before the count exceeds the certain time interval, upon determining that a certain interruption command has been issued by a user.

7. Teletext receiver system, arranged to receive teletext page data from an arrangement of a channel selection circuit (3), arranged to retrieve a signal comprising video information and embedded teletext page data and belonging to a channel selected in accordance with a user command, and a teletext retrieval circuit (6), arranged to extract the teletext page data embedded in the received signal, and comprising a memory unit (21) for caching received teletext page data, specially adapted for carrying out a method according to any one of claim 1-6.

8. Electronic video appliance, preferably a television set, comprising a channel selection circuit (3), arranged to retrieve a signal comprising video information and embedded teletext page data and belonging to a channel selected in accordance with a user command, a teletext retrieval circuit (6), arranged to extract the teletext page data embedded in the received signal, a memory unit (21) for caching teletext page data extracted by the teletext retrieval circuit, and a controller (7), specially adapted for carrying out a method according to any one of claims 1-6.

9. Computer program product, comprising means, when run on a programmable device for enabling the programmable device to carry out a method according to any one of claims 1-6.

## Patentansprüche

1. Verfahren zum Speichern von Videotextdaten, empfangen von einer Anordnung einer Kanalselektionsschaltung (3), vorgesehen zum Erfassen eines Signals mit Videoinformation und eingebetteten Videotextseitendaten und zu einem Kanal gehörend, der entsprechend einem Benutzerbefehl selektiert wird, und eine Videotexterfassungsschaltung (6), vorgesehen zum Extrahieren der Videotextseitendaten, eingebettet in das empfangene Signal, wobei bei der Feststellung, dass ein Benutzerbefehl für eine Umschaltung von einem ersten selektierten Kanal auf einen zweiten selektierten Kanal ausgegeben worden ist, ein Zählvorgang verstrichener Zeit gestartet wird, und Speicherung empfangener Videotextseitendaten in einer Speichereinheit (21) ausgelöst wird, wenn der Zählvorgang ein bestimmtes Zeitintervall übersteigt, **dadurch gekennzeichnet, dass** der Zählvorgang verstrichener Zeit, wenn bestimmt wird, dass ein Benutzerbefehl um von dem zweiten selektierten Kanal auf einen anderen selektierten Kanal umzuschalten, ausgegeben worden ist, von Null an neu gestartet wird.

2. Verfahren nach Anspruch 1, das Folgendes umfasst: das Anfangen der Speicherung empfangener Videotextseitendaten in der Speichereinheit (21) neben den Videotextseitendaten, die vorher in der Speichereinheit (21) gespeichert wurden.

3. Verfahren nach Anspruch 1 oder 2, das Folgendes umfasst: das Speichern von Information (28), die Videotextseitendaten, die gespeichert sind, mit einer Identifikation des Kanals koppelt. Zu dem das Signal, aus dem die Information extrahiert worden ist, gehört.

4. Verfahren nach Anspruch 2 oder 3, das Folgendes umfasst: das Detektieren vorher gespeicherter Videotextseitendaten, nur dann, wenn festgestellt wird, dass eine maximale Speicherkapazität der Speichereinheit (21) zu klein ist um eine Einheit empfangener Videotextseitendaten in der Speichereinheit (21) neben vorher in der Speichereinheit (21) gespeicherten Videotextseitendaten zu gestatten.

5. Verfahren nach Anspruch 4, das Folgendes umfasst: das Löschen nur eines Teils der vorher gespeicherten Videotextseitendaten.

6. Verfahren nach einem der vorstehenden Ansprüche, das Folgendes umfasst: das Anfangen der Speicherung empfangener Videotextseitendaten in der Speichereinheit (21) bevor der Zählvorgang ein bestimmtes Zeitintervall überschreitet, bei der Ermittlung, dass ein bestimmter Unterbrechungsbefehl von einem Benutzer ausgegeben worden ist.

7. Videotextempfängersystem, vorgesehen zum Empfangen von Videotextseitendaten von einer Anordnung einer Kanalselektionsschaltung (3), vorgesehen zum Erfassen eines Signals mit Videoinformation und eingebetteten Videotextseitendaten und zu einem Kanal gehörend, der entsprechend einem Benutzerbefehl selektiert wurde, und eine Videotexterfassungsschaltung (6), vorgesehen zum Extrahieren der Videotextseitendaten, die in das empfangene Signal eingebettet sind, und mit einer Speichereinheit (21) zum Speichern empfangener Videotextseitendaten, insbesondere vorgesehen zum Durchführen eines Verfahren nach einem der Ansprüche 1 bis 6.

8. Elektronisches Videogerät, vorzugsweise ein Fernseher, mit einer Kanalselektionsschaltung (3), vorgesehen zum Abrufen eines Signals mit Videoinformation und eingebetteten Videotextseitendaten und zu einem Kanal gehörend, der entsprechend einem Benutzerbefehl selektiert wurde, mit einer Videotextabrufschaltung (6), vorgesehen zum Extrahieren der Videotextseitendaten, eingebettet in das empfangene Signal, mit einer Speichereinheit (21) zum Speichern von Videotextseitendaten, extrahiert durch die Videotextabrufschaltung, und einem Controller (7), insbesondere vorgesehen zum Durchführen eines Verfahrens nach einem der Ansprüche 1 bis 6.

9. Computerprogrammprodukt mit Mitteln, die, wenn sie in einer programmierbaren Anordnung laufen, die programmierbare Anordnung in den Stand setzen, ein Verfahren nach einem der Anspruche 1 bis 6 durchzuführen.

## Revendications

1. Procédé de mise en antémémoire de données de pages de télétexte reçues depuis un montage d'un circuit de sélection de chaînes (3), destiné à rechercher un signal comprenant des informations vidéo et des données de pages de télétexte intégrées et appartenant à une chaîne sélectionnée conformément à une commande de l'utilisateur et un circuit de recherche de télétexte (6) destiné à extraire les données de pages de télétexte intégrées dans le signal reçu, dans lequel un comptage du temps écoulé est entamé lors de la détermination qu'une commande de l'utilisateur pour le passage d'une première chaîne choisie à une deuxième chaîne choisie a été émise et l'enregistrement des données de pages de télétexte reçues dans une unité de mémoire (21) est commencé lorsque le comptage dépasse un certain intervalle temporel, **caractérisé en ce que** le comptage du temps écoulé est réinitialisé à partir de zéro s'il'est établi qu'une commande de l'utilisateur pour passer de la deuxième chaîne sélectionnée à toute autre chaîne sélectionnée a été émis.

2. Procédé selon la revendication 1, comprenant le début de l'enregistrement des données de pages de télétexte reçues dans l'unité de mémoire (21) en même temps que les données de pages de télétexte préalablement enregistrées dans l'unité de mémoire (21).

3. Procédé selon l'une des revendications 1 ou 2, comprenant des informations d'enregistrement (28) associant les données de pages de télétexte à enregistrer à l'identification de la chaîne à laquelle appartient le signal dont elles ont été extraites.

4. Procédé selon l'une des revendications 2 ou 3, comprenant l'effacement des données de pages de télétexte précédemment enregistrées uniquement s'il est établi qu'une capacité d'enregistrement maximale de l'unité de mémoire (21) est insuffisante pour permettre l'enregistrement d'une unité des données de pages de télétexte reçues dans l'unité de mémoire (21) en même temps que les données de pages de télétexte préalablement enregistrées dans l'unité de mémoire (21).

5. Procédé selon la revendication 4, comprenant l'effacement d'une partie seulement des données de pages de télétexte préalablement enregistrées.

6. Procédé selon l'une des revendications précédentes comprenant de commencer l'enregistrement des données de pages de télétexte reçues dans l'unité de mémoire (21) avant que le comptage ne dépasse un certain intervalle temporel, en déterminant qu'une certaine commande d'interruption a été émise par un utilisateur.

7. Système récepteur de télétexte destiné à recevoir des données de pages de télétexte à partir d'un montage d'un circuit de sélection de chaînes (3) destiné à retrouver un signal comprenant des informations vidéo et des données de pages de télétexte intégrées et appartenant à une chaîne choisie conformément à une commande de l'utilisateur et d'un circuit de recherche de télétexte (6) destiné à extraire les données de pages de télétexte intégrées dans le signal reçu et comprenant une unité de mémoire (21) pour mettre en antémémoire les données reçues des pages de télétexte, destinée spécifiquement à mettre en oeuvre un procédé conforme à l'une des revendications 1 à 6.

8. Appareil vidéo électronique, de préférence un téléviseur, comprenant un circuit de sélection de chaînes destiné à rechercher un signal comprenant des informations vidéo et des données de pages de télétexte intégrées et appartenant à une chaîne choisie conformément à une commande de l'utilisateur, un circuit de recherche de télétexte (6) destiné à extraire les données de pages de télétexte intégrées dans le signal reçu, une unité de mémoire (21) pour mettre en antémémoire les données de pages de télétexte extraites par le circuit de recherche de télétexte et un contrôleur (7) destiné spécifiquement à mettre en oeuvre un procédé conformément à l'une des revendications 1 à 6.

9. Programme informatique comprenant des moyens qui tournent sur un dispositif programmable pour permettre au dispositif programmable de mettre en oeuvre un procédé conformément à l'une des revendications 1 à 6.
